# EUROPÄISCHE PATENTSCHRIFT

(11) **EP 3 526 773 B1**
(45) Veröffentlichungstag und Bekanntmachung des Hinweises auf die Patenterteilung: **25.11.2020**
(21) Anmeldenummer: 17786883.3
(22) Anmeldetag: 09.10.2017
(51) Int. Cl.: G06T 19/00

(54) **SYSTEM ZUR ERZEUGUNG ANGEREICHERTER BILDER**
SYSTEM FOR PRODUCING AUGMENTED IMAGES
SYSTÈME DE GÉNÉRATION D'IMAGES ENRICHIES

(30) Priorität: 14.10.2016 DE 102016119640
(43) Veröffentlichungstag der Anmeldung: 21.08.2019
(73) Patentinhaber: uniqFEED AG, 8152 Opfikon-Glattbrugg (CH)
(72) Erfinder: DRAGON, Ralf, 30559 Hannover (DE)
(74) Vertreter: Müller Hoffmann & Partner
(86) Internationale Anmeldenummer: PCT/EP2017/075625
(87) Internationale Veröffentlichungsnummer: WO 2018/069220

(56) Entgegenhaltungen:
- DREXEL HALLAWAY ET AL: "BRIDGING THE GAPS: HYBRID TRACKING FOR ADAPTIVE MOBILE AUGMENTED REALITY", APPLIED ARTIFICIAL INTELLIGENCE, Bd. 18, Nr. 6, 1. Juli 2004 (2004-07-01), Seiten 477-500, XP055434009, US ISSN: 0883-9514, DOI: 10.1080/08839510490462768
- SHEPARD DANIEL P ET AL: "Precise Augmented Reality Enabled by Carrier-Phase Differential GPS", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21. September 2012 (2012-09-21), Seiten 3169-3184, XP056008599,
- ABAWI D F ET AL: "Accuracy in Optical Tracking with Fiducial Markers: An Accuracy Function for ARToolKit", PROCEEDINGS OF THE THIRD IEEE AND ACM INTERNATIONAL SYMPOSIUM ON MIXED AND AUGMENTED REALITY, NOV. 2 - 5, ARLINGTON, VA, USA, IEEE, PISCATAWAY, NJ, USA, 2. November 2004 (2004-11-02), Seiten 260-261, XP010769708, DOI: 10.1109/ISMAR.2004.8 ISBN: 978-0-7695-2191-6
- Anonymous: "Location | Android Developers", , 1. Juli 2014 (2014-07-01), XP055188387, Gefunden im Internet: URL:https://web.archive.org/web/2014070106 5849/http://developer.android.com/referenc e/android/location/Location.html [gefunden am 2015-05-08]

## Beschreibung

Die vorliegende Erfindung betrifft ein System zur Erzeugung angereicherter Bilder, umfassend wenigstens eine Bildaufnahmeeinrichtung, wenigstens ein mit der Bildaufnahmeeinrichtung verbundenes Analysemodul, wenigstens eine mit dem Analysemodul verbundene Anzeigeeinrichtung, wobei die Bildaufnahmeeinrichtung dazu eingerichtet ist, Bilder, insbesondere Bilddaten an das Analysemodul zu übertragen, und wobei das Analysemodul dazu eingerichtet ist, Steuerdaten an die Anzeigeeinrichtung zu übertragen, wobei die Steuerdaten die Bilddaten und Anweisungsdaten zum Anzeigen von wenigstens einer Anreicherung in einem Bild umfassen, wobei die Anzeigeeinrichtung dazu eingerichtet ist auf Basis der Steuerdaten ein aufgenommenes Bild und eine zugehörige Anreicherung wiederzugeben.

Solche Systeme kommen insbesondere bei sogenannten Augmented-Reality-Systemen zum Einsatz. Diese umfassen in der Regel eine Kamera (Bildaufnahmeeinrichtung), eine Verarbeitungseinheit (Analysemodul) und ein Display (Anzeigeeinrichtung). Die Verarbeitungseinheit ermittelt Informationen über das geometrische und radiometrische Verhältnis zwischen Kamera und Umgebung, so dass sie anschließend realistisch aussehende Objekte in die Szene einfügen kann. Das geometrische Verhältnis, d.h. die Position der Kamera im Raum, kann beispielsweise durch externe Infrarot-Tracker, durch in der Szene sichtbare Marker, oder durch Beschleunigungs- oder Schrittsensoren bestimmt werden. Das radiometrische Verhältnis, d.h. der Beleuchtungsunterschied zwischen der aufgenommenen Umgebung und einem künstlich erzeugtem Bild, kann beispielsweise durch Intensitätsvergleiche zwischen einer Vorlage und der aktuellen Aufnahme ermittelt werden.

Falls bei einem solchen bekannten System jedoch Schwierigkeiten bei einer Komponente gibt, die das geometrische oder radiometrische Verhältnis zwischen Kamera und Umgebung erfasst bzw. berechnet, oder ein realistisches Bild aus anderen Gründen nicht erzeugt werden kann, wird üblicherweise ein Bild erzeugt, das nicht realistisch wirkt, oder ein Bild, in dem keine Augmented Reality eingeblendet wird. In beiden Fällen ergibt sich ein unzureichendes Ergebnis, d.h. bei den durch die Anzeigeeinrichtung dargestellten Bildern. "BRIDGING THE GAPS: HYBRID TRACKING FOR ADAPTIVE MOBILE AUGMENTED REALITY" von DREXEL HALLAWAY et al offenbart ein Augmented-Reality System, das unterschiedliche virtuelle Daten abhängig von der Genauigkeit des Benutzerpositionstrackings anzeigt.

Aufgabe der Erfindung ist es, ein System für die Anreicherung von Bilder bereitzustellen, das es ermöglicht, die obigen Nachteile zu vermeiden. Die Erfindung wird durch die unabhängigen Ansprüche definiert.

Zur Lösung dieser Aufgabe wird vorgeschlagen, dass das System ferner ein Erweiterungsmodul umfasst, das im Übertragungsweg zwischen dem Analysemodul und der Anzeigeeinrichtung angeordnet ist, dass das Analysemodul weiter dazu eingerichtet ist, wenigstens eine Zuverlässigkeitsinformation für jedes Bild zu erzeugen, dass das Erweiterungsmodul dazu eingerichtet ist, die Steuerdaten und die Zuverlässigkeitsinformation vom Analysemodul zu empfangen und auf Basis der Steuerdaten und der Zuverlässigkeitsinformation modifizierte Steuerdaten zu erzeugen und an die Anzeigeeinrichtung zu übertragen.

Das Erweiterungsmodul ermöglicht dabei mittels der Zuverlässigkeitsinformation beispielsweise Messtoleranzen von Sensoren zu berücksichtigen oder zu bestimmen, in welchem Zustand ein Sensorsystem ist (Ausfall/in Betrieb o.ä.). Entsprechend können mittels des Erweiterungsmoduls die üblicherweise direkt an die Anzeigeeinrichtung weitergegebenen Steuerdaten bei Bedarf angepasst werden und so geändert bzw. modifiziert werden, dass an die Anzeigeeinrichtung modifizierte Steuerdaten übertragen und dort angezeigt werden können, die eine Darstellung mit gutem Ergebnis darstellen, insbesondere in Bezug auf die Anreicherungen in den von der Bildaufnahmeeinrichtung aufgenommenen und mittels der Anzeigeeinrichtung wiedergegebenen Bildern.

Der hier verwendete Begriff "Anreicherung" soll eine Art Verbesserung bzw. Veränderung des Abbildes der Realität bezeichnen Es wird beispielsweise an eine Überblendung einer in der Realität in englischer Sprache verfassten Werbebotschaft auf einer Bande eines Sportplatzes mit einer gleichen oder anderen Werbung in einer anderen Sprache gedacht. Der hier verwendete Begriff "Anreicherung" ist im Fachjargon auch als "Augmentierung" bekannt, was sich an dem englischen Begriff "augment" für verbessern, verstärken, anreichern orientiert.

Das Erweiterungsmodul weist ein Zustandsmodul und ein Animationsmodul auf, wobei das Zustandsmodul dazu eingerichtet ist, die Zuverlässigkeitsinformation zu empfangen, eine Zustandsinformation aus mehreren, insbesondere vier, Zustandsinformationen auszuwählen und die ausgewählte Zustandsinformation an das Animationsmodul zu übergeben. Dabei kann das Animationsmodul dazu eingerichtet sein, die Steuerdaten zu empfangen und basierend auf der Zustandsinformation die modifizierten Steuerdaten zu erzeugen.

Das Animationsmodul kann ferner dazu eingerichtet sein, in Abhängigkeit der Zustandsinformation die Bilddaten und Anweisungsdaten für die Anreicherung als modifizierte Steuerdaten zu übertragen, was einem Einschaltzustand für Anreicherungen entspricht, oder nur die Bilddaten als modifizierte Steuerdaten zu übertragen, was einem Ausschaltzustand für Anreicherungen entspricht,
oder eine Übergangsanimation als Teil der modifizierten Steuerdaten zu übertragen, wobei die Übergangsanimation beim Wechsel zwischen dem Einschaltzustand und dem Ausschaltzustand ausgewählt wird.

Vorzugsweise ist die Übergangsanimation derart beschaffen, dass durch die Bildaufnahmeeinrichtung erfasste reale Daten und Daten einer anzuzeigenden Anreicherung integriert verarbeitet und angezeigt werden. Entsprechend kann durch die Integration der Realität in eine Übergangsanimation ein Grad von Realismus erreicht werden, bei dem es für einen Betrachter der Anzeigeeinrichtung nicht erkennbar ist, ob das System aktuell eine Anreicherung anzeigt oder reale Bilder ohne Anreicherung darstellt.

Das Animationsmodul kann ein Realisierungsmodul aufweisen, das dazu eingerichtet ist, eine Übergangsanimation zur erstellen, die eine bestimmte Anzahl Bilder aufweist, und in einem Animationspuffer zu speichern. Weiter kann das Animationsmodul einen Animationsspeicher aufweisen, der dazu eingerichtet ist, vorbestimmte Übergangsanimationen in Form von computerlesbaren Instruktionen zu speichern. Somit können in dem Animationsspeicher vorgefertigte bzw. fertig programmierte Übergangsanimationen bereitgestellt werden. Diese gespeicherten Übergangsanimationen können vom Realisierungsmodul in Abhängigkeit der Steuerdaten, insbesondere der Zuverlässigkeitsinformation und der Zustandsinformation, aus dem Animationsspeicher gelesen und mit den Steuerdaten kombiniert werden, so dass die modifizierten Steuerdaten die ausgewählte Übergangsanimation enthalten, um einen Wechsel zwischen Einschaltzustand und Ausschaltzustand zu ermöglichen.

Das Animationsmodul kann ferner dazu eingerichtet sein, im Ausschaltzustand aus den vom Analysemodul bereitgestellten Steuerdaten die Anweisungsdaten für eine Anreicherung zu entfernen und nur die Bilddaten als modifizierte Steuerdaten an die Anzeigeeinrichtung zu übertragen.

Ferner kann das Animationsmodul dazu eingerichtet sein, die Steuersignale des Analysemoduls entsprechend der Zustandsinformation derart zu modifizieren, dass bei einem Wechsel zwischen dem Einschaltzustand und dem Ausschaltzustand eine Übergangsanimation nahtlos eingefügt wird.

Die Übergangsanimation kann als virtuelle Rollbande oder als virtuelles Fenster oder dergleichen ausgeführt sein.

Es wird darauf hingewiesen, dass der oben beschriebenen Wechsel zwischen Einschaltzustand und Ausschaltzustand einen Wechsel in beide Richtung umfasst, also vom Einschaltzustand zum Ausschaltzustand und vom Ausschaltzustand zum Einschaltzustand.

Die Erfindung betrifft ferner auch die Verwendung eines oben beschriebenen Systems in einem Fernsehübertragungssystem oder/und in einem virtuellen Werbeanzeigesystem oder/und in einem Augmented-Reality-System.

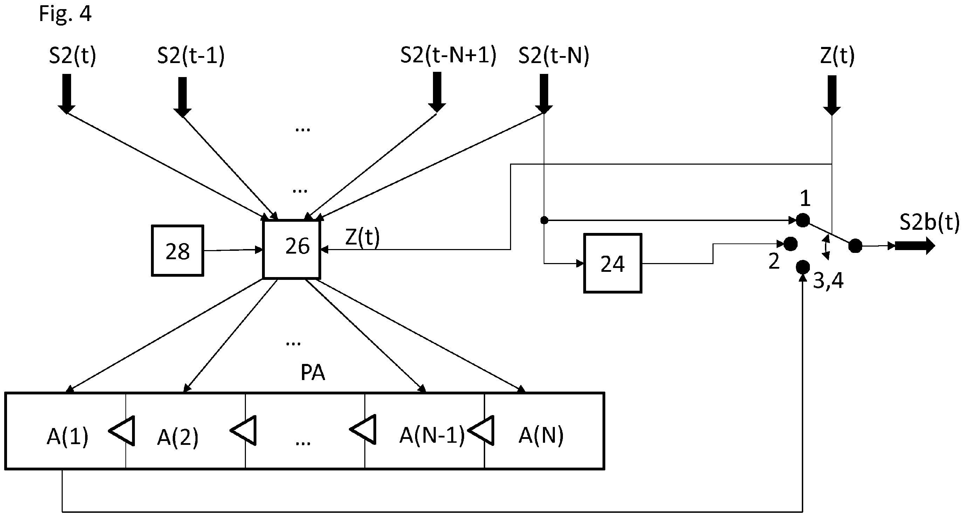

Zur Verwendung eines hier beschrieben Systems im Rahmen eines Fernsehübertragungssystem wird auf die am gleichen Tag eingereichte, parallele Anmeldung mit dem Titel "Fernsehübertragungssystem zur Erzeugung angereicherter Bilder" der gleichen Anmelderin verwiesen. Es wird insbesondere auf das dortige unter Bezugnahme auf die Figuren 4 bis 6 beschriebene Multipliziermodul und das Kontrollmodul hingewiesen, bei denen ein System gemäß der vorliegenden Anmeldung eingebunden sein kann.

Die Erfindung wird nachfolgend unter Bezugnahme auf die anliegenden Figuren beispielhaft und nicht einschränkend beschrieben.
Fig. 1 zeigt eine vereinfachte und schematische Darstellung eines Systems zur Erzeugung angereicherter Bilder.
Fig. 2 zeigt schematische und vereinfacht ein Erweiterungsmodul des Systems.
Fig. 3 zeigt schematisch und vereinfacht mögliche Zustände und zugehörige Zustandsübergänge.
Fig. 4 zeigt schematisch und vereinfacht die Funktionsweise eines Animationsmoduls des Erweiterungsmoduls.
Fig. 5 zeigt schematisch und vereinfacht den Ablauf einer Übergangsanimation anhand einer virtuellen Rollbande.

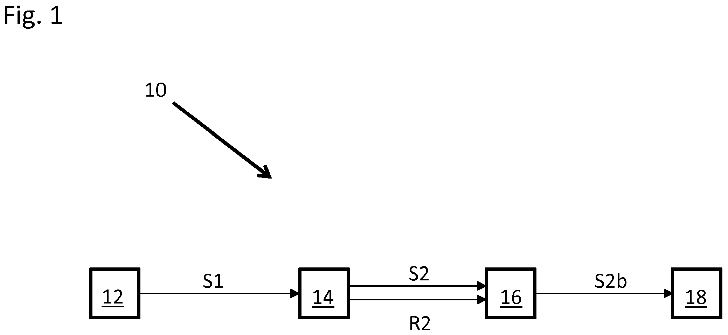

Fig. 1 zeigt vereinfacht und schematisch ein Diagramm eines Systems 10 zur Erzeugung angereicherter Bilder. Das System umfasst eine Bildaufnahmeeinrichtung bzw. Kamera 12, eine Analysemodul 14, ein Erweiterungsmodul 16 und eine Anzeigeeinrichtung bzw. ein Display 18. Die Bildaufnahmeeinrichtung 12 übermittelt Kamerabilder (und ggf. noch zusätzliche Sensordaten) als Kameradaten S1 zum Analysemodul 14. Das Analysemodul 14 verarbeitet diese Kameradaten S1 und erzeugt hieraus Steuerdaten S2 bzw. Steuerbefehle S2. Derartige Steuerdaten bzw. Steuerbefehle S2 können beispielsweise OpenGL-Befehle und OpenGL-Texturen sein. Die Steuerdaten S2 werden an das Erweiterungsmodul 16 gesendet. Das Erweiterungsmodul 16 ist dazu eingerichtet, die Steuerdaten S2 zu verändern. Es werden die Sensordaten bzw. Kameradaten S1 vom Analysemodul 14 um Zuverlässigkeitsinformationen R2 erweitert, beispielsweise Messtoleranzen von Sensoren. Das Erweiterungsmodul 16 erzeugt aus den Steuerdaten S2 und den Zuverlässigkeitsinformationen R2 modifizierte Steuerdaten S2b, um die Anzeigeeinrichtung 18 anzusteuern.

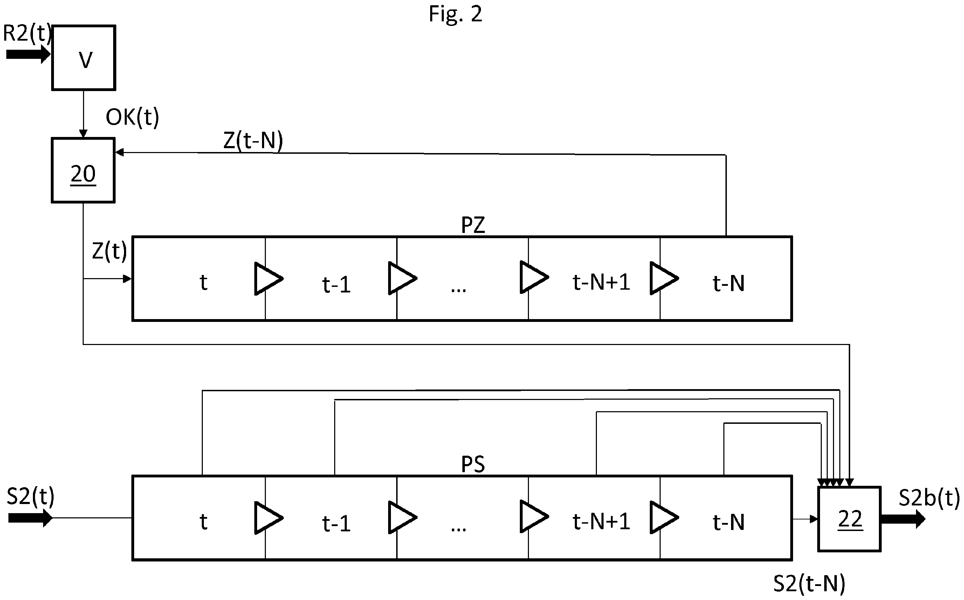

Unter Bezugnahme auf die Fig. 2 wird nachfolgend das Erweiterungsmodul 16 beschrieben. Das Erweiterungsmodul 16 umfasst eine Komponente V, die dazu eingerichtet ist, Zuverlässigkeitsinformation R2 bzw. ein Zuverlässigkeitssignal R2 in ein binäres Signal OK(t) umzuwandeln. Dabei kann die Umwandlung beispielsweise auf einem Schwellwertvergleich basieren, um zu entscheiden, welcher Binärwert für das Signal OK vergeben wird. Das Signal OK(t) gibt an, ob die Steuerdaten S2(t) geeignet sind, angezeigt zu werden. Das Signal OK wird von der Komponente V an ein Zustandsmodul 20, das auch als Zustandsmanager bezeichnet werden kann, übergeben.

Das Zustandsmodul 20 wählt einen von mehreren, im vorliegenden Beispiel von vier, möglichen Zuständen Z(t) aus und gibt diesen Zustand Z(t) an ein Animationsmodul 22, das auch als Animationsmanager bezeichnet werden kann, weiter. Die Auswahl eines Zustands Z(t) basiert dabei auf vorangegangenen Zuständen, wie etwa einem Zustand Z(t-N). Vorangegangene Zustände, wie etwa Z(t-N), Z(t-N+1) etc., sind in einem Zustandspuffer PZ gespeichert und können ggf. auch vom Modul 20 abgefragt werden.

Das Animationsmodul 22 empfängt die Steuerdaten S2, die durch einen Puffer PS um bis zu N Takte verzögert werden können bzw. verzögert worden sind. Ferner empfängt das Animationsmodul 22 den Zustand Z(t) als Eingangsgröße bzw. Input, d.h. den Zustand, der in N Takten erreicht werden soll.

Das Zustandsmodul 20 bestimmt den Zustand des Animationsmoduls 22. Im vorliegenden Beispiel werden vier Zustände Z(t) unterschieden, die die Ausgabe von modifizierten Steuerdaten S2b(t) des Animationsmoduls 22 beeinflussen.

Die Zustände können dabei durch zwei Variablen EN und TR beschrieben werden, wobei EN eine Repräsentation ist, ob Anreicherungen eingeschaltet oder ausgeschaltet sind, und wobei TR eine Repräsentation ist, ob eine Übergangsanimation beim Wechsel zwischen einem Einschaltzustand und einem Ausschaltzustand abgespielt werden soll.

Die Zustände sind
Z=1, wobei EN=1 und TR=0 sind, und das Animationsmodul 22 unmodifizierte Steuerdaten S2(t-N) ausgeben soll, d.h. die Anreicherungen (Augmentierungen) sind eingeschaltet (Einschaltzustand);
Z=2, wobei EN=0 und TR=0 sind, und das Animationsmodul 22 Originalbilder aus den Steuerdaten S2(t-N) als modifizierte Steuerdaten S2b ausgeben soll, ohne Einblendung von Anreicherungen, d.h. die Anreicherungen (Augmentierungen) sind ausgeschaltet (Ausschaltzustand);
Z=3, wobei EN=1 und TR=1 sind, und das Animationsmodul 22 eine Übergangsanimation abspielen soll ausgehend von einem Einschaltzustand (Z=1) zu einem Ausschaltzustand (Z=2); und
Z=4, wobei EN=0 und TR=1 sind, und das Animationsmodul 22 eine Übergangsanimation abspielen soll ausgehend von einem Ausschaltzustand (Z=2) zu einem Einschaltzustand (Z=1).

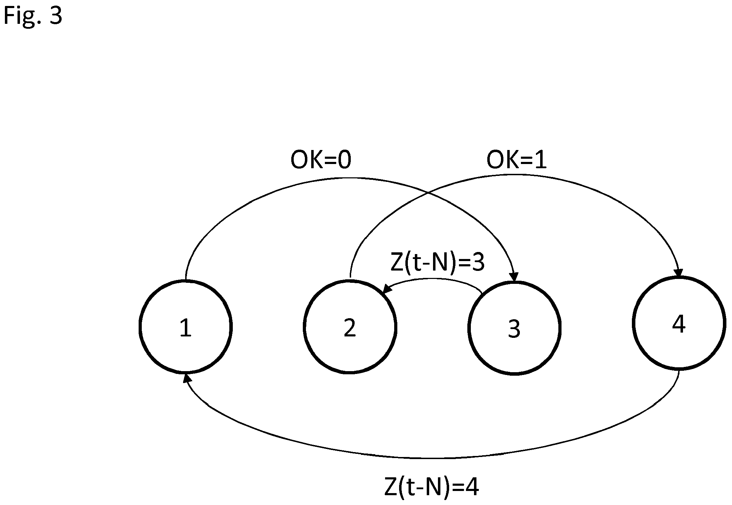

Die Zustände Z(t) = 1 bis 4 und deren Übergänge sind in der Fig. 3 beispielhaft als Diagramm dargestellt. Das Ausschalten der Anzeige von Anreicherungen ist dabei ein N Takte dauernder Übergang von Z=1 und OK=0 (Daten S2(t) sind ungeeignet zur Anzeige) über Z=3 zu Z=2. Das Einschalten der Anzeige von Anreicherungen ist ein N Takte dauernder Übergang von Z=2 und OK=1 (Daten S2(t) sind geeignet zur Anzeige) über Z=4 zu Z=1.

In Fig. 4 ist schematisch in einem Diagramm die Funktionsweise des Animationsmoduls 22 dargestellt. Die Aufgabe des Animationsmoduls 22 ist es, die Steuersignale S2 in Abhängigkeit von bzw. entsprechend dem Zustand Z(t) zu modifizieren, so dass bei Zustandswechseln nahtlose Übergangsanimationen eingefügt werden können und dass die Anzeigeeinrichtung 18 beim Zustand Z=2 (Ausschaltzustand) die durch die Aufnahmeeinrichtung 12 aufgenommenen Originalbilder anzeigt.

Die Übergangsanimationen sind dabei nicht nur derart ausgestaltet bzw. ausgeführt, dass eine Anreicherung langsam mehr und mehr eingeblendet bzw. ausgeblendet wird. Vielmehr können durch das Erweiterungsmodul 16, insbesondere durch das Animationsmodul 22, Steuerbefehle modifiziert werden, Hierdurch lassen sich gezielt Übergangsanimationen erstellen, so dass es für ein Betrachter der Anzeigeeinrichtung 18 nicht erkennbar ist, ob aktuell die Realität (Originalbilder) oder angereicherte Bilder (mit Anreicherungen/Augmentierungen) angezeigt wird.

Der Zustand Z(t) wählt aus, ob S2(t-N) unverändert ausgegeben werden soll, d.h. ob die anreicherung bzw. Augmentierung aus den Steuerdaten S2 durch ein Modul 24 entfernt werden soll, oder ob eine Übergangsanimation A abgespielt werden soll.

Bei einer Zustandsänderung bzw. einem Wechseln von Z=1 zu Z=3 (Ausschalten) und Z=2 zu Z=4 (Einschalten) wird durch ein Realisierungsmodul 26 eine N Bilder lange Animation A erstellt und im Animationspuffer PA gespeichert. Anschließend wird die Übergangsanimation A anstelle von S2 als modifizierte Steuerdaten S2b an die Anzeigeeinrichtung 18 übermittelt.

A(1) bezeichnet das erste durch die Anzeigeeinrichtung 18 erzeugte Bild der Übergangsanimation A, A(N) das letzte. Für eine nahtlose Ausschalt-Übergangsanimation muss das gerenderte Bild A(N) dem Bild S2(t) (ohne Anreicherung/Augmentierung) entsprechen. Analog dazu muss für eine nahtlose Einschalt-Übergangsanimation A(1) dem Bild S2(t-N) (ohne Anreicherung/Augmentierung) entsprechen.

Das Animationsmodul 22 umfasst ferner eine Animationsdatenbank (Animationsspeicher) 28. In der Animationsdatenbank 28 liegen die Übergangsanimationen A in Form von Programmcode-Instruktionen, die verwendet werden, um die Steuerdaten S2 zu Übergangsanimationen A zu wandeln. Die Instruktionen können beispielsweise Texturen verwenden, die erst zur Laufzeit durch Teile von S2(t) bis S2(t-N) ersetzt werden. Dies geschieht ähnlich, wie etwa bei der Definition von Animationen in bekannten nichtlinearen Videobearbeitungsprogrammen für die Post-Produktion (z.B. Adobe After Effects, Adobe Premiere, Davinci Resolve, Nuke). Allerdings lassen sich diese bekannten Programme nicht Live einsetzen und die von diesen Programmen erzeugten Effekte werden nicht mit Steuerinformationen verknüpft, sondern auf gesamte Videoclips angewendet.

Zum Zeitpunkt, zu dem die Übergangsanimation erstellt werden soll, liegen dem Animationsmodul 22 mit den Steuerdaten S2(t) bis S2(t-N) sämtliche Informationen vor, wie und wo eine Anreicherung/Augmentierung im Zustand Z=1 dargestellt werden würde. Die in dem Animationsmodul 22 enthaltene Effektdatenbank 28 definiert, wie Steuerdaten S2 bei der Effektrealisierung in dem Realisierungsmodul 26 modifiziert werden müssen, um eine Übergangsanimation A zu erstellen und in dem Animationspuffer PA abzulegen.

Beispielsweise können durch das Realisierungsmodul 26 OpenGL-Koordinatentransformationen von Steuerdaten S2 durchgeführt werden, um eine 2D oder 3D-Verschiebung oder eine Rotation zu erreichen, oder es können OpenGL-Texturen anhand der in S2 enthaltenen Bilder erstellt und in die Übergangsanimation A integriert werden.

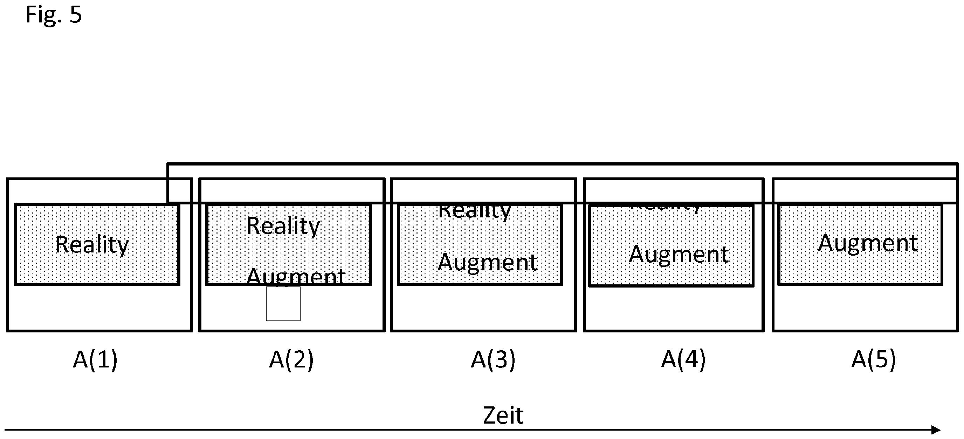

Fig. 5 zeigt rein beispielhaft und vereinfacht eine Übergangsanimation einer sogenannten virtuellen Rollbande. Der Übergang vom Zustand Z=2 (Ausschaltzustand, keine Anreicherung) im ersten Bild (links) erfolgt über den Zustand Z=4 (Übergangsanimation) in den Bildern 2 bis 4 (von links) zum Zustand Z=1 (Einschaltzustand, Anreicherung wird angezeigt bzw. überblendet). Dabei zeigt der punktierte Bereich bzw. die punktiert dargestellte Fläche den Bereich, der im Zustand Z=1 angereichert werden würde, der ab erst im fünften Bild (nach Abspielen der Übergangsanimation in den Bildern 2-4) vollständig angereichert bzw. augmentier wird.

Diese Übergangsanimation erfolgt hier rein beispielhaft über N=5 Takte. Bei konkreten Anwendungen werden Übergangsanimationen für einen fließenden bzw. nahtlosen Übergang wohl eher mehr Takte benötigen. Die Realisierung der Übergangsanimation kann wie folgt realisiert werden:
Die Textur "Reality" wird aus dem ursprünglichen Bild in S2(t-N) an derjenigen Stelle extrahiert, wo die Anreicherung/Augmentierung eingeblendet werden würde.
Eine neue Textur T wird erstellt, indem "Reality" und "Augment" vertikal miteinander verbunden werden. Die Steuerbefehle werden in der Übergangsanimation A entsprechend angepasst, so dass anstelle einer unmittelbaren (übergangslosen) Anzeige von "Augment" die neue Textur T angezeigt wird, welche eine Kombination von "Reality" und "Augment" darstellt.
Die vertikale Roll-Bewegung kann beispielsweise durch einen Region-of-Interest-Operator (ROI) erzeugt werden, der auf die Textur T angewendet wird. In A(1) wählt dieser die obere Hälfte aus (d.h. Reality), dann in A(2) bis A(4) immer tiefere ROIs, bis er in A(5) genau die Textur "Augment" auswählt, die nach der Animation weiterhin dargestellt wird, da der Zustand Z=1 erreicht ist.

Die Steuerbefehle zur Realisierung werden in die Übergangsanimation A integriert, als modifizierte Steuerdaten S2b(t) ausgegeben und zuletzt durch die Anzeigeeinrichtung 18 wie oben bereits erläutert ausgegeben.

Das hier vorgestellte System ermöglicht also durch Integration der Realität in eine Einschalt- oder Ausschalt-Übergangsanimation einer Anreicherung (virtuelles Objekt) einen Grad von Realismus, bei dem nicht erkannt werden kann, ob das System bezogen auf das Anzeigen bzw. Überblenden von Anreicherungen aktiviert (Einschaltzustand) oder deaktiviert (Ausschaltzustand)

## Patentansprüche

1. System (10) zur Erzeugung angereicherter Bilder, umfassend
wenigstens eine Bildaufnahmeeinrichtung (12),
wenigstens ein mit der Bildaufnahmeeinrichtung (12) verbundenes Analysemodul (14),
wenigstens eine mit dem Analysemodul (14) verbundene Anzeigeeinrichtung (18), wobei die Bildaufnahmeeinrichtung (12) dazu eingerichtet ist, Bilder, insbesondere Bilddaten an das Analysemodul (14) zu übertragen, und wobei das Analysemodul (14) dazu eingerichtet ist, Steuerdaten (S2) an die Anzeigeeinrichtung (18) zu übertragen, wobei die Steuerdaten (S2) die Bilddaten und Anweisungsdaten zum Anzeigen von wenigstens einer Anreicherung in einem Bild umfassen,
wobei die Anzeigeeinrichtung (18) dazu eingerichtet ist auf Basis der Steuerdaten (S2) ein aufgenommenes Bild und eine zugehörige Anreicherung wiederzugeben,
wobei das System (10) ferner ein Erweiterungsmodul (16) umfasst, das im Übertragungsweg zwischen dem Analysemodul (14) und der Anzeigeeinrichtung (18) angeordnet ist,
wobei das Analysemodul (14) weiter dazu eingerichtet ist, wenigstens eine Zuverlässigkeitsinformation (R2) für jedes Bild zu erzeugen, wobei die Zuverlässigkeitsinformation (R2) Daten über eine Komponente des Systems enthält, die das geometrische oder radiometrische Verhältnis zwischen der Bildaufnahmeeinrichtung (12) und der Umgebung erfasst oder/und berechnet, und
wobei das Erweiterungsmodul (16) dazu eingerichtet ist, die Steuerdaten (S2) und die Zuverlässigkeitsinformation (R2) vom Analysemodul (14) zu empfangen und auf Basis der Steuerdaten (S2) und der Zuverlässigkeitsinformation (R2) modifizierte Steuerdaten (S2b) zu erzeugen und an die Anzeigeeinrichtung (18) zu übertragen,
wobei das Erweiterungsmodul (16) ein Zustandsmodul (20) und ein Animationsmodul (22) aufweist, wobei das Zustandsmodul (20) dazu eingerichtet ist, die Zuverlässigkeitsinformation (R2) zu empfangen, eine Zustandsinformation (Z) aus mehreren, insbesondere vier, Zustandsinformationen auszuwählen und die ausgewählte Zustandsinformation (Z) an das Animationsmodul (22) zu übergeben.

2. System nach Anspruch 1, **dadurch gekennzeichnet, dass** das Animationsmodul (22) dazu eingerichtet ist, die Steuerdaten (S2) zu empfangen und basierend auf der Zustandsinformation (Z) die modifizierten Steuerdaten (S2b) zu erzeugen.

3. System nach Anspruch 1 oder 2, **dadurch gekennzeichnet, dass** das Animationsmodul (22) ferner dazu eingerichtet ist, in Abhängigkeit der Zustandsinformation (Z)
die Bilddaten und Anweisungsdaten für die Anreicherung als modifizierte Steuerdaten (S2b) zu übertragen, was einem Einschaltzustand (Z=1) für Anreicherungen entspricht
oder
nur die Bilddaten als modifizierte Steuerdaten (S2b) zu übertragen, was einem Ausschaltzustand (Z=2) für Anreicherungen entspricht,
oder
eine Übergangsanimation (A) als Teil der modifizierten Steuerdaten (S2b) zu übertragen, wobei die Übergangsanimation (A) beim Wechsel zwischen dem Einschaltzustand (Z=1) und dem Ausschaltzustand (Z=2) ausgewählt wird.

4. System nach Anspruch 3, **dadurch gekennzeichnet, dass** die Übergangsanimation (A) derart beschaffen ist, dass durch die Bildaufnahmeeinrichtung (12) erfasste reale Daten und Daten einer anzuzeigenden Anreicherung integriert verarbeitet und angezeigt werden.

5. System nach Anspruch 3 oder 4, **dadurch gekennzeichnet, dass** das Animationsmodul (22) ein Realisierungsmodul (26) aufweist, das dazu eingerichtet ist, eine Übergangsanimation (A) zu erstellen, die eine bestimmte Anzahl (N) Bilder aufweist, und in einem Animationspuffer (PA) zu speichern.

6. System nach einem der Ansprüche 3 bis 5, **dadurch gekennzeichnet, dass** das Animationsmodul (22) einen Animationsspeicher (28) aufweist, der dazu eingerichtet ist, vorbestimmte Übergangsanimationen (A) in Form von computerlesbaren Instruktionen zu speichern.

7. System nach einem der Ansprüche 3 bis 6, **dadurch gekennzeichnet, dass** das Animationsmodul (22) dazu eingerichtet ist, im Ausschaltzustand (Z=2) aus den vom Analysemodul (14) bereitgestellten Steuerdaten (S2) die Anweisungsdaten für eine Anreicherung zu entfernen und nur die Bilddaten als modifizierte Steuerdaten (S2b) an die Anzeigeeinrichtung (18) zu übertragen.

8. System nach einem der Ansprüche 3 bis 7, **dadurch gekennzeichnet, dass** das Animationsmodul (22) dazu eingerichtet ist, die Steuersignale des Analysemoduls (14) entsprechend der Zustandsinformation (Z) derart zu modifizieren, das bei einem Wechsel zwischen dem Einschaltzustand (Z=1) und dem Ausschaltzustand (Z=2) eine Übergangsanimation (A) nahtlos eingefügt wird.

9. System nach einem der Ansprüche 3 bis 7, **dadurch gekennzeichnet, dass** die Übergangsanimation (A) als virtuelle Rollbande oder als virtuelles Fenster oder dergleichen ausgeführt ist.

10. Verwendung eines Systems nach einem der vorhergehenden Ansprüche in einem Fernsehübertragungssystem oder/und in einem virtuellen Werbeanzeigesystem oder/und in einem Augemented-Reality-System.

## Claims

1. A system (10) for generating augmented images, comprising
at least one image-recording device (12),
at least one analysis module (14) connected to the image-recording device (12),
at least one display device (18) connected to the analysis module (14), wherein the image-recording device (12) is configured to transmit images, in particular image data, to the analysis module (14), and wherein the analysis module (14) is configured to transmit control data (S2) to the display device (18), wherein the control data (S2) comprise the image data and instruction data for the display of at least one augmentation in an image,
wherein the display device (18) is configured to reproduce a recorded image and an associated augmentation on the basis of the control data (S2),
wherein the system (10) further comprises an expansion module (16), which is arranged in the transfer path between the analysis module (14) and the display device (18),
wherein the analysis module (14) is further configured to generate at least one piece of reliability information (R2) for each image, wherein the reliability information (R2) comprises data about a component of the system that detects and/or calculates the geometric or radiometric relationship between the image-recording device (12) and the environment, and
wherein the expansion module (16) is configured to receive the control data (S2) and the reliability information (R2) from the analysis module (14) and generate modified control data (S2b) on the basis of the control data (S2) and of the reliability information (R2) and transmit the modified control data to the display device (18),
wherein the expansion module (16) comprises a state module (20) and an animation module (22), wherein the state module (20) is configured to receive the reliability information (R2), select a piece of state information (Z) from a plurality of, in particular four, pieces of state information, and transfer the selected state information (Z) to the animation module (22).

2. The system according to claim 1, **characterized in that** the animation module (22) is configured to receive the control data (S2) and generate the modified control data (S2b) based on the state information (Z).

3. The system according to claim 1 or 2, **characterized in that** the animation module (22) is further configured, depending on the state information (Z),
to transmit the image data and instruction data for the augmentation as modified control data (S2b), which corresponds to a switch-on state (Z=1) for augmentations,
or
transmit the image data only as modified control data (S2b), which corresponds to a switch-off state (Z=2) for augmentations,
or
transmit a transition animation (A) as part of the modified control data (S2b), wherein the transition animation (A) is selected when switching between the switch-on state (Z=1) and the switch-off state (Z=2).

4. The system according to claim 3, **characterized in that** the transition animation (A) is configured in such a manner that real data detected by the image-recording device (12) and data of an augmentation to be displayed are processed in an integrated manner and displayed.

5. The system according to claim 3 or 4, **characterized in that** the animation module (22) includes a realization module (26) which is configured to create a transition animation (A), which has a specific number (N) of images, and store it in an animation buffer (PA).

6. The system according to any one of claims 3 to 5, **characterized in that** the animation module (22) includes an animation memory (28), which is configured to store predetermined transition animations (A) in the form of computer-readable instructions.

7. The system according to any one of claims 3 to 6, **characterized in that** the animation module (22) is configured to remove the instruction data for an augmentation from the control data (S2) provided by the analysis module (14) in the switch-off state (Z=2) and transmit only the image data as modified control data (S2b) to the display device (18).

8. The system according to any one of claims 3 to 7, **characterized in that** the animation module (22) is configured to modify the control signals of the analysis module (14) in accordance with the state information (Z) in such a manner that a transition animation (A) is inserted smoothly when switching between the switch-on state (Z=1) and the switch-off state (Z=2).

9. The system according to any one of claims 3 to 7, **characterized in that** the transition animation (A) is designed as a virtual rolling banner or as a virtual window or the like.

10. Use of a system according to any one of the preceding claims in a television broadcast system and/or in a virtual advertising display system and/or in an augmented reality system.

## Revendications

1. Système (10) de génération d'images enrichies, comprenant
au moins un dispositif de prise de vue (12),
au moins un module d'analyse (14) relié au dispositif de prise de vue (12),
au moins un dispositif d'affichage (18) relié au module d'analyse (14), dans lequel le dispositif de prise de vue (12) est arrangé pour transmettre des images, en particulier des données d'image au module d'analyse (14), et dans lequel le module d'analyse (14) est arrangé pour transmettre des données de commande (S2) au dispositif d'affichage (18), dans lequel les données de commande (S2) comprennent les données d'image et des données d'instruction pour afficher au moins un enrichissement dans une image,
dans lequel le dispositif d'affichage (18) est arrangé pour présenter, sur la base des données de commande, une image prise et un enrichissement associé,
dans lequel le système (10) comprend en outre un module d'élargissement, qui est disposé sur la trajectoire de transmission entre le module d'analyse (14) et le dispositif d'affichage (18),
dans lequel le module d'analyse (14) est en outre arrangé pour générer au moins une information de fiabilité (R2) pour chaque image, dans lequel l'information de fiabilité (R2) contient des données sur un composant du système qui capture ou/et calcule le rapport géométrique ou radiométrique entre le dispositif de prise de vue (12) et l'environnement, et
dans lequel le module d'élargissement (16) est arrangé pour recevoir les données de commande (S2) et l'information de fiabilité (R2) du module d'analyse (14) et, sur la base des données de commande (S2) et de l'information de fiabilité (R2), générer des données de commande modifiées (S2b) et les transmettre au dispositif d'affichage (18),
le module d'élargissement (16) comporte un module d'état (20) et un module d'animation (22), dans lequel le module d'état (20) est arrangé pour recevoir l'information de fiabilité (R2), sélectionner une information d'état (Z) parmi plusieurs, en particulier quatre, informations d'état, et transmettre l'information d'état (Z) sélectionnée au module d'animation (22).

2. Système selon la revendication 1, **caractérisé en ce que** le module d'animation (22) est arrangé pour recevoir les données de commande (S2) et, en se basant sur l'information d'état (Z), générer les données de commande modifiées (S2b).

3. Système selon la revendication 1 ou 2, **caractérisé en ce que** le module d'animation (22) est en outre arrangé pour, en fonction de l'information d'état (Z),
transmettre les données d'image et les données d'instruction pour l'enrichissement en tant que données de commande modifiées (S2b), ce qui correspond à un état de mise en service (Z=1) pour des enrichissements
ou
transmettre seulement les données d'image en tant que données de commande modifiées (S2B), ce qui correspond à un état de mise hors service (Z=2) pour des enrichissements,
ou
transmettre une animation de transition (A) en tant que partie des données de commande modifiées (S2b), dans lequel l'animation de transition (A) est sélectionnée lors du changement entre l'état de mise en service (Z=1) et l'état de mise hors service (Z=2).

4. Système selon la revendication 3, **caractérisé en ce que** l'animation de transition (A) est constituée de telle sorte que des données réelles capturées par le dispositif de prise de vue (12) et des données d'un enrichissement à afficher soient traitées et affichées.

5. Système selon la revendication 3 ou 4, **caractérisé en ce que** le module d'animation (22) comporte un module de réalisation, qui est arrangé pour établir une animation de transition (A) qui comporte un nombre N prédéterminé d'images et la stocker dans un tampon d'animation (PA).

6. Système selon l'une des revendications 3 à 5, **caractérisé en ce que** le module d'animation (22) comporte une mémoire d'animation (28), qui est arrangée pour stocker des animations de transition (A) prédéfinies sous forme d'instructions lisibles par ordinateur.

7. Système selon l'une des revendications 3 à 6, **caractérisé en ce que** le module d'animation (22) est arrangé pour, dans l'état de mise hors service (Z=2), supprimer des données de commande (S2) fournies par le module d'analyse (14) les données d'instruction pour un enrichissement, et transmettre seulement les données d'image en tant que données de commande modifiées (S2b) au dispositif d'affichage (18).

8. Système selon l'une des revendications 3 à 7, **caractérisé en ce que** le module d'animation (22) est arrangé pour modifier les signaux de commande du module d'analyse (14) selon l'information d'état (Z), de telle sorte que lors d'un changement entre l'état de mise en service (Z=1) et l'état de mise hors service (Z=2), une animation de transition (A) soit insérée sans discontinuité.

9. Système selon l'une des revendications 3 à 7, **caractérisé en ce que** l'animation de transition (A) est effectuée en tant que bande de roulement virtuelle ou en tant que fenêtre virtuelle ou similaire.

10. Utilisation d'un système selon l'une des revendications précédentes dans un système de transmission télévisuelle ou/et dans un système d'affichage publicitaire virtuel ou/et dans un système de réalité augmentée.
